# FASCICULE DE BREVET EUROPEEN

(11) **EP 0 526 328 B1**
(45) Date de publication et mention de la délivrance du brevet: **30.03.1994**
(21) Numéro de dépôt: 92402180.1
(22) Date de dépôt: 29.07.1992
(51) Int. Cl.: C02F 3/06, C02F 3/28

(54) **Procédé pour l'élimination des nutriments carbonés, azotés et phosphorés**
Verfahren zum Entfernen von organischem Kohlenstoff, Stickstoff und Phosphor
Process for removal of organic nutrients containing carbon, nitrogen and phosphorus

(30) Priorité: 02.08.1991 FR 9109872
(43) Date de publication de la demande: 03.02.1993
(73) Titulaire: OTV (OMNIUM de TRAITEMENTS et de VALORISATION), 92407 Courbevoie (FR)
(72) Inventeur: Rogalla, Franck, Cabinet BALLOT-SCHMIT, F-75116 Paris (FR)
(74) Mandataire: Vidon, Patrice

(56) Documents cités:
- EP-A- 0 159 535
- EP-A- 0 302 545
- EP-A- 0 382 340
- DE-A- 4 001 855
- FR-A- 2 604 990
- GB-A- 1 580 733

## Description

La présente invention a trait au domaine du traitement des eaux, en vue de leur épuration, par voie biologique, notamment des eaux usées et résiduaires ou toutes eaux contenant du phosphore sous diverses formes et éventuellement de l'azote ammoniacal. Elle concerne tout spécialement un procédé destiné à éliminer le carbone, l'azote et les traces de phosphore par déphosphatation biologique sur biofiltres.

On sait que l'on peut épurer des eaux résiduaires par le procédé biologique dit à boues activées dans lequel on maintient une biomasse en suspension en présence d'oxygène et de nutriment carboné. Les bactéries présentes dans la biomasse dégradent les matières polluées et sont séparées de l'eau purifiée dans un clarificateur. On peut aussi maintenir dans le système des bactéries autotrophes qui permettent la transformation d'azote ammoniacal en azote nitrique si l'on adopte un âge de boues élevé, au moins six jours, dans le système. Si l'on incorpore dans le système une période de contact non aérée (ou anoxique) on peut forcer les bactéries hétérotrophes à dégrader les nitrates en présence de nutriment carboné. Si en outre on fait subir aux bactéries une alternance systématique des conditions anaérobie et aérobie, on peut provoquer une suraccumulation de composés phosphorés dans les bactéries.

Un tel procédé, de principes rappelés ci-dessus, est connu depuis 1974 sous le nom de procédé "BARDENPHO".

Toutes les configurations actuellement disponibles pour l'élimination complète de l'azote et du phosphore par voie biologique constituent des variantes du procédé classique susvisé à boues activées. Une variété d'agencements possibles des zones anaérobie, anoxie et aérobie a donné lieu au développement de plusieurs procédés au cours de ces 20 dernières années, notamment ceux connus sous les noms de Phostrip, A/O, Phoredox, UCT, Biodenipho, etc.

Ces configurations ont en commun un bassin anaérobie en tête du flux hydraulique de façon à exposer la biomasse à une alternance des conditions aérobie/anaérobie. Pour réduire les nitrates en zone anaérobie, plusieurs circuits internes de recirculation des boues entre des zones anoxie et anaérobie sont utilisés afin d'obtenir une bonne performance de déphosphatation biologique.

Dans ces procédés, plusieurs facteurs limitent l'efficacité de la déphosphatation dont notamment : le temps d'exposition de la biomasse aux conditions anaérobiques qui, le plus souvent, doit être limité entre 0,5 et 2 heures; les charges massiques qui restent faibles à cause des contraintes d'âge des boues imposées par la nitrification. Ceci restreint l'application des procédés en cause au traitement d'effluents dont le rapport DCO (demande chimique en oxygène)/P (phosphore) total est élevé, notamment supérieur à 20. Il est difficile d'obtenir, dans ces procédés, des taux résiduels de phosphore très faibles du fait de l'impossibilité d'augmenter la charge de nutriment carboné pour les bactéries hétérotrophes et du fait que le clarificateur subséquent relargue des matières en suspension très riches en phosphore. Ainsi il est nécessaire d'adjoindre au traitement d'eau résiduaire un processus physico-chimique supplémentaire pour atteindre un taux résiduel très faible de phosphore.

Plus récemment d'autres procédés d'épuration des eaux résiduaires ont été proposés dans lesquels on ne met plus en oeuvre des systèmes de boues activées, à bactéries circulant librement mais où l'on utilise des réacteurs dits "biofiltres" dans lesquels les bactéries sont fixées sur un support. On peut citer par exemple, dans ce type de techniques, les processus décrits dans les brevets français publiés n° 2 604 990 et n° 2 632 947. Ces procédés conduisent à d'excellents résultats dans l'élimination du carbone et de l'azote mais, du fait de la fixation des bactéries, ils ne permettent pas d'assurer une déphosphatation biologique satisfaisante.

Il a maintenant été trouvé que l'on pouvait résoudre ce problème de l'élimination poussée du phosphore dans le cadre opérationnel des processus en biofiltres selon une technique permettant d'obtenir un taux optimum de substrat carboné dans une cellule en anaérobie, de parvenir à une absence d'accepteurs d'électrons (O₂ et NO₃) pendant la phase non aérée et de minimiser les pertes de matières en suspension (bactéries).

Selon la caractéristique essentielle du procédé de l'invention où, pour éliminer les nutriments carbonés et phosphorés par circulation de l'eau résiduaire à traiter dans des biofiltres à lits filtrants immergés, on fait alterner de façon cyclique des phases successives d'anaérobiose puis d'aérobiose, l'entrée du flux à traiter se faisant toujours dans le filtre en anaérobiose.

Si l'on veut, en outre, éliminer l'azote, des bactéries nitrifiantes sont installées sur les lits filtrants immergés.

Un tel procédé présente de nombreux avantages qui ressortiront tout au long de la description ci-après. En particulier, l'état de fixation de la biomasse rend indépendant le temps de séjour des bactéries dans le réacteur du temps de séjour hydraulique pendant les phases cycliques du processus. Ceci permet l'exploitation optimale des capacités de stockage et de relargage du phosphore de la colonie déphosphatante. En outre, le substrat carboné sur la biomasse en état d'anaérobiose se trouve toujours à un taux optimal grâce au volume d'eau décantée sur les cellules anaérobies. Par ailleurs, la filtration simultanée dans les biofiltres en série permet d'obtenir de bons indices en M.E.S. (matières en suspension) à la sortie en eau traitée et de réduire la perte en biomasse riche en phosphore dans l'effluent. D'autre part, selon un perfectionnement du procédé, on peut opérer le lavage des cellules de filtration à la fin des cycles d'aération avec une eau de lavage simplement nitrifiée (riche en nitrates); ceci permet d'empêcher le relargage du phosphore par les boues de lavage lors d'une décantation postérieure. On notera enfin que, dans le cas d'eaux résiduaires à traiter où le rapport DCO/P est très faible, on peut compléter le processus par une déphosphatation physico-chimique en injectant simplement les réactifs de déphosphatation sur la sortie de la phase anaérobie où l'effluent est concentré en P de P04 après le relargage.

Conformément à une réalisation particulièrement avantageuse du procédé de l'invention, l'alternance des phases anaérobiose et aérobiose, est séparée par une phase de temporisation c'est-à-dire d'arrêt de l'acheminement en flux à traiter.

En pratique, pour une cellule à l'état d'anaérobiose on met en oeuvre, avantageusement, au moins deux cellules en aérobiose. Les temps moyens de traitement dans le cycle précité correspondent généralement à 1h à 8h pour l'anaérobiose, 0,5 à 1h pour la temporisation et 4 à 24h pour l'aérobiose.

Selon un mode de réalisation de l'invention, où l'on met en oeuvre par exemple trois à cinq cellules aérées, les flux d'eau et de gaz oxygéné dans ces cellules circulent en cocourant et de façon ascendante, le gaz oxygéné étant envoyé sensiblement au milieu de chaque cellule.

Conformément à une variante du procédé, on peut faire passer l'eau brute à traiter, en amont du système et selon le cycle précité, dans un réacteur à lit de boues à l'état d'anoxie. L'eau brute est introduite de façon ascendante dans ce réacteur.

Selon une autre variante de réalisation, on peut faire passer le flux d'eau à traiter dans une cellule à l'état d'anoxie, disposée en amont du système de traitement selon le cycle du procédé. Par exemple on aura dans ce cas, en série : 1 cellule anoxie , 1 cellule en anaérobie en 1 à 4 cellules, ou plus, en aérobie. La cellule anoxie peut aussi être placée en aval de l'ensemble des cellules anaérobie et aérés; moyennant un ajout de source carbonée extérieure.

L'invention sera mieux comprise par la description plus détaillée de modes de réalisation, tels que ceux précités, par référence aux dessins de la planche unique annexée qui représentent schématiquement :
- Figure 1, un module de filtration pour un ensemble de cellules filtrantes de station d'épuration d'eau, comprenant une cellule anaérobie pour trois cellules anoxie/aérobie;
- figure 2, un autre module de filtration du même type que la figure 1 mais avec disposition, en tête du procédé, d'un réacteur à lit de boue en anoxie;
- figure 3, un ensemble de biofiltration pour station d'épuration dans lequel on a introduit, en amont de l'ensemble cellules anaérobiose/aérobiose, une cellule en anoxie pour la réalisation du processus de dénitrification qui ne rentre pas dans le cycle d'alternance précité.

Sur la planche annexée on a représenté, en haut et à droite, les symboles de signification de chaque cellule de filtration : anaérobie, anoxie, aérobie et phase de temporisation.

En outre, pour chacun des trois exemples de réalisation on trouve en concordance avec chaque figure, un cycle complet de traitement alterné selon l'invention, à savoir : 1 à 8; 1' à 8'; 1'' à 8'' avec indication pour chaque étape du temps moyen exprimé en heure (h).

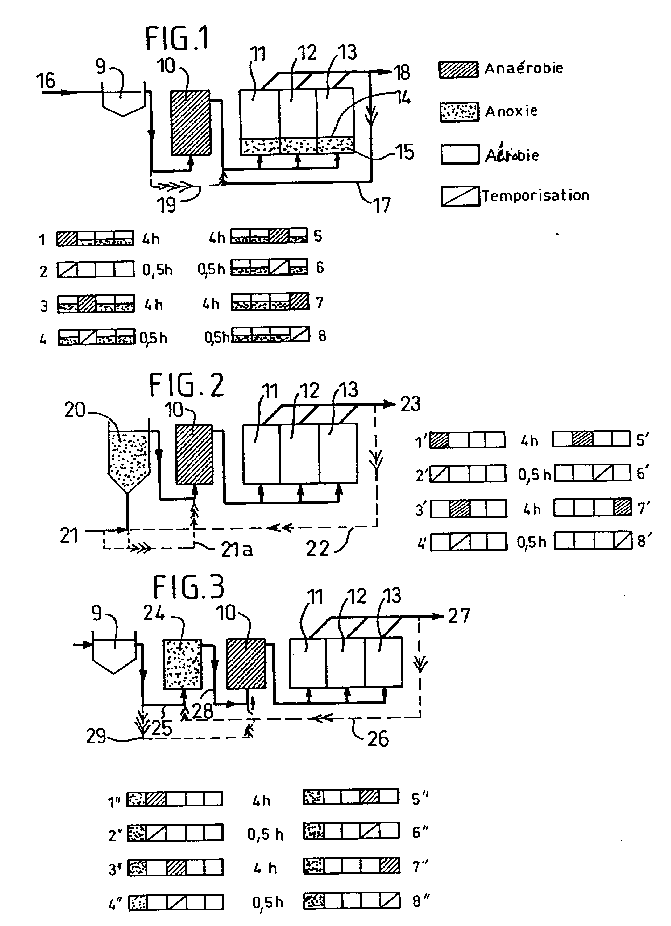

Dans la configuration illustrée sur la figure 1, on a disposé, en tête du module de traitement une cellule anaérobie 10 puis, en série, des cellules à la fois anoxie/aérobie 11, 12, 13 (qui peuvent aller jusqu'à cinq). L'ensemble des cellules peut être précédé par un décanteur 9. Chaque cellule de filtration est dotée d'un lit filtrant immergé flottant ou non flottant, comme par exemple équipé d'un matériau plus léger pour l'eau et de granulométrie 2 à 6 mm. La grille d'aération dans les cellules 11, 12, 13 est placée au niveau 14 au sein du lit filtrant de façon à créer une zone anoxie 15 au sein de chaque cellule en état d'aérobiose. L'eau à traiter, flèche 16, arrive de façon ascendante dans la cellule en anaérobiose 10 puis on introduit un flux cocourant ascendant d'eau et d'air pendant la phase aérobie comme indiqué sur la figure 1. Une partie 17 du débit d'effluent traité 18 est recirculée et mélangée au flux sortant de la cellule anaérobie 10. Selon la variante indiquée par les pointillés et les trois flèches, une partie 19 du débit d'eau décantée peut être introduite directement dans la zone anoxie 15 des cellules aérées 11, 12, 13, de façon à favoriser la dénitrification.

Selon la configuration illustrée sur la figure 2, on a disposé, en tête du module de traitement selon le procédé, un réacteur 20 à lit de boue ascendant à l'état d'anoxie de façon à réaliser le processus de dénitrification à l'extérieur des cellules de filtration. Les processus d'oxydation de la phase organique, de nitrification et de déphosphatation biologiques sont effectués par la biomasse fixée, comme dans le cas de la figure 1, sur le milieu support des cellules de filtration. Le lit de boue dans le réacteur 20 est alimenté par la totalité ou une partie de l'eau brute 21 entrant dans la station.

L'autre fraction sera appliquée directement sur le pilote anaérobie selon 21 a (Fig. 2). Selon une variante une partie 21a de l'eau brute peut être dirigée sur le filtre anaérobie 10. Le réacteur 20 reçoit aussi le débit de recirculation 22 de l'effluent 23 des cellules aérobies. Le réacteur 20 joue ainsi le rôle à la fois de décanteur primaire et de réacteur de dénitrification. Le circuit d'eau se fait ensuite dans des cellules de traitement 10 à 13 de la même façon que pour la figure 1.

Selon la variante de configuration illustrée sur la figure 3, la particularité majeure consiste en l'introduction d'une cellule anoxie 24, en tête du module de traitement en cycle alterné selon l'invention. Cette cellule 24 est destinée au processus de dénitrification. Elle reçoit une partie ou tout le débit 25 d'eau entrant dans la station ainsi que le débit de recirculation 26 de l'effluent 27 des cellules en aérobie 11, 12, 13. L'effluent 28 sortant de la cellule en anoxie 24 est entièrement conduit dans les cellules en anaérobie 10 puis en aérobie 11, 12, 13. La cellule 10 peut aussi recevoir, selon une variante, une partie 29 du débit en eau décantée. L'ensemble des cellules peut être précédé par un décanteur 9.

A titre d'exemple chiffré, non limitatif, de mise en oeuvre du procédé en cycles alternés selon l'invention, on se basera maintenant sur une configuration du type : une cellule en anaérobiose suivie de trois cellules en aérobiose comme par exemple les cellules 10 puis 11, 12, 13 des figures 2 et 3 annexées. Chaque cellule avait une section de 4 mètres et une hauteur de 4 mètres et le lit filtrant immergé, dans chaque cellule, occupait une hauteur de 3 mètres. Les caractéristiques du cycle d'alternance adopté étaient de 4 heures pour l'anaérobie; 0,5 heure pour la temporisation (arrêt d'alimentation en eau à traiter) et 12 heures pour l'aérobie. Les caractéristiques moyennes de l'eau brute à traiter étaient :
- DCO totale: : 400 mg/l
- N (de NH₄): : 50 mg/l
- P (de P04³⁻): : 10 mg/l

La vitesse de passage de l'eau à traiter dans chaque réacteur aérobie était d'environ 0,95 m/h et évidemment trois fois plus importante dans le réacteur en anaérobiose. Le débit d'eau à traiter était d'environ 15m³/h.

Les charges volumiques appliquées dans la mise en oeuvre du procédé étaient les suivantes :
- en DCO total : 5 kg DCO/m³ aéré/jour
- en N (de NH₄) : 1 kg N (NH₄)/m³ aéré/jour
- en N (de N0₃) : 1,5 kg N (N0₃)/m₃ aéré/jour

la qualité de l'eau traitée, dans l'effluent de sortie était très bonne, avec les caractéristiques suivantes :
- DCO totale: : 50 mg/l
- N (de NH₄): : moins de 1 mg/l
- Phosphore total: : moins de 1 mg/l

## Revendications

1. Procédé pour l'élimination du carbone et du phosphore dans les eaux résiduaires par voie biologique, du type consistant à faire circuler l'eau dans des biofiltres à lits filtrants immergés fonctionnant en anaérobie puis aérobie ou vice versa, caractérisé en ce que, dans un système d'au moins deux cellules ou biofiltres en série on fait alterner de façon cyclique des phases d'anaérobiose, puis d'aérobiose, l'entrée du flux à traiter se faisant toujours dans le filtre en anaérobiose.

2. Procédé selon la revendication 1, pour permettre, en outre, l'élimination de l'azote, caractérisé en ce que des bactéries nitrifiantes sont installées sur les lits filtrants immmergés.

3. Procédé selon la revendication 1 ou 2, caractérisé en ce que chacune des phases du cycle de traitement est séparée par une phase de temporisation correspondant à un arrêt de l'alimentation en eau à traiter.

4. Procédé selon l'une quelconque des revendications 1, 2 ou 3, caractérisé en ce que, pour une cellule en anaérobiose, on met en oeuvre au moins deux cellules en aérobiose, les temps moyens de traitement dans le cycle précité correspondant à : 1h à 8h pour l'anaérobiose; 0,5 à 1h pour la temporisation; et 4 à 24h pour l'aérobiose.

5. Procédé selon la revendication 1, caractérisé en ce que l'on utilise trois à cinq cellules aérées par cellule anaérobie.

6. Procédé selon l'une quelconque des revendications 1 à 5, caractérisé en ce que, dans les cellules aérées, les flux d'eau et de gaz oxygéné circulent en cocourant et de façon ascendante, le gaz oxygéné ou air étant envoyé sensiblement au milieu de chaque cellule, et l'effluent étant recirculé en zone inférieure.

7. Procédé selon l'une quelconque des revendications 1 à 5, caractérisé en ce que, en amont du système et selon le cycle précité, on fait passer l'eau brute à traiter, de façon ascendante, dans un réacteur à lit de boues à l'état d'anoxie en état anoxie, alimenté par l'eau brute et une recirculation de l'eau épurée.

8. Procédé selon l'une quelconque des revendications 1 à 5, caractérisé en ce que, avant la mise en oeuvre du cycle précité dans une cellule en anaérobiose et une à cinq cellules en aérobiose, on fait passer le flux à traiter dans une cellule en anoxie disposée en amont dudit système alimenté par l'eau à traiter et une recirculation de l'eau épurée.

9. Procédé selon l'une quelconque des revendications 1 à 5, caractérisé en ce que, en aval de la mise en oeuvre du procédé précité dans une cellule en anaérobiose et une à cinq cellules en aérobiose on fait passer l'effluent dans une cellule anoxie.

## Patentansprüche

1. Verfahren zur Entfernung von Kohlenstoff und Phosphor aus Abwässern auf biologischem Weg, von der Art, die darin besteht, das Wässer durch Biofilter mit eingetauchten Filterbetten zirkulieren zu lassen, die anaerobisch und dann aerobisch oder vice versa funktionieren,
dadurch gekennzeichnet, daß man in einem System, welches aus mindestens zwei in Reihe geschalteten Zellen oder Biofiltern besteht, anaerobe und aerobe Phasen sich zyklisch abwechseln läßt, wobei das zu behandelnde Wasser immer in den anaeroben Filter eintritt.

2. Verfahren gemäß Anspruch 1, um zusätzlich die Entfernung von Stickstoff zu ermöglichen,
dadurch gekennzeichnet, daß nitrifizierende Bakterien auf den eingetauchten Filterbetten angebracht werden.

3. Verfahren gemäß einem der Ansprüche 1 oder 2,
dadurch gekennzeichnet, daß jede Phase des Behandlungszyklus durch eine Haltephase getrennt wird, welche einer Einspeisungsunterbrechung des zu behandelnden Wassers entspricht.

4. Verfahren gemäß einem der Ansprüche 1, 2 oder 3,
dadurch gekennzeichnet, daß für eine anaerob arbeitende Zelle mindestens zwei aerob arbeitende Zellen eingesetzt werden, wobei die durchschnittlichen Behandlungsdauern im oben erwähnten Zyklus den folgenden Werten entsprechen: 1 bis 8 Stunden für die anaerobische Phase, 0,5 bis 1 Stunde für die Haltephase und 4 bis 24 Stunden für die aerobische Phase.

5. Verfahren gemäß Anspruch 1,
dadurch gekennzeichnet, daß man für jede anaerobische Zelle drei bis fünf belüftete Zellen einsetzt.

6. Verfahren gemäß einem der Ansprüche 1 bis 5,
dadurch gekennzeichnet, daß in den belüfteten Zellen die Wasser- und die sauerstoffhaltigen Gasströme gemeinsam nach oben fließen, wobei das sauerstoffhaltige Gas bzw. die Luft etwa in die Mitte einer jeden Zelle eingeführt und das Abwasser im unteren Bereich rezirkuliert wird.

7. Verfahren gemäß einem der Ansprüche 1 bis 5,
dadurch gekennzeichnet, daß man oberhalb des Systems und gemäß des oben erwähnten Zyklus das noch unbehandelte Wasser steigend durch einen Schlammbettreaktor schickt, der sich im Zustand der Anoxie befindet und durch das noch unbehandelte Wasser und durch rezirkuliertes, gereinigtes Wasser gespeist wird.

8. Verfahren gemäß einem der Ansprüche 1 bis 5,
dadurch gekennzeichnet, daß vor Ausführung des oben erwähnten Zyklus in einer anaerobischen Zelle und in einer bis fünf aerobischen Zellen, man den zu behandelnden Wasserfluß durch eine oberhalb des Systems angebrachte anoxische Zelle leitet, welche durch das zu behandelnde Wasser und durch rezirkuliertes, gereinigtes Wasser gespeist wird.

9. Verfahren gemäß einem der Ansprüche 1 bis 5,
dadurch gekennzeichnet, daß man nach Durchführung des oben erwähnten Verfahrens in einer anaerobischen Zelle und in einer bis fünf aerobischen Zellen das Abwasser durch eine anschließende anoxische Zelle leitet.

## Claims

1. Method for the elimination of carbon and phosphorus from waste water by biological means, of the type consisting in circulating the water in biofilters with submerged filtering beds working anaerobically and then aerobically or vice versa characterised in that, in a system of at least two cells or biofilters in series, phases of anaerobiosis and then aerobiosis are alternated cyclically, the entry of the flow to be treated taking place always in the filter under anaerobic conditions.

2. Method according to Claim 1, for enabling furthermore, nitrogen to be eliminated, characterized in that nitrifying bacteria are placed in the submerged filtering beds.

3. Method according to Claim 1 or 2, characterized in that each of the phases of the treatment cycle is separated by a hold phase corresponding to an interruption of the supply of water to be treated.

4. Method according to any one of Claims 1, 2 or 3 characterized in that, for a cell under anaerobic conditions, at least two cells under aerobic conditions are used, the average periods of treatment in the abovementioned cycle corresponding to: 1 h to 8 h for the anaerobiosis, 0.5 to 1 h for the hold phase and 4 h to 24 h for the aerobiosis.

5. Method according to Claim 1, characterized in that three to five aerated cells are used per anaerobic cell.

6. Method according to any one of Claims 1 to 5 characterised in that, in the aerated cells, the circulation of water and of oxygenated gas takes place in ascending co-currents, the oxygenated gas or air being sent substantially to the middle of each cell, and the effluent being recirculated in a lower zone.

7. Method according to any one of Claims 1 to 5, characterized in that upstream of the system and according to the abovementioned cycle, the untreated water to be treated is passed in an upflow into a sludge blanket reactor in the anoxic state, supplied with the untreated water and a recirculation of the purified water.

8. Method according to any one of Claims 1 to 5 characterized in that, before the implementation of the abovementioned cycle in a cell under anaerobic conditions and one to five cells under aerobic conditions, the flow to be treated is passed into a cell in the anoxic state positioned upstream of the said system supplied with the water to be treated and a recirculation of the purified water.

9. Method according to any one of Claims 1 to 5 characterized in that, downstream with respect to the implementation of the abovementioned method in a cell under anaerobic conditions and one to five cells under aerobic conditions, the effluent is passed into an anoxic cell.
